# EUROPEAN PATENT APPLICATION

(11) **EP 2 278 753 A1**
(43) Date of publication of application: **26.01.2011**
(21) Application number: 09305654.7
(22) Date of filing: 07.07.2009
(51) Int. Cl.: H04L 12/24

(54) **A method of describing a network resource, corresponding computer program product, and data storage device therefor**

(71) Applicant: Alcatel Lucent, 75008 Paris (FR)
(72) Inventor: Roessler, Horst, 70794 Filderstadt (DE); Grob-Lipski, Heidrun, 72181 Starzach (DE)
(74) Representative: Kleinbub, Oliver

(57) **Abstract**

The invention concerns a method of managing resources, the method comprising the steps of receiving (101) from a user a request for a service based on a resource, provisioning (102) the resource, and delivering (105) the service to the user, wherein the resource is a virtual resource and the method further comprises the steps of mapping (103) the virtual resource to a physical resource and instantiating (104) a process on the physical resource, and the service is delivered (105) by the process. The invention further concerns a computer program product and a device therefor.

## Description

The invention relates to a method of describing a network resource according to claim 1, a computer program product according to claim 9, and a data storage device according to claim 10.

In computing, network resource planning (NRP) is the planning, scheduling and control of a computer network. NRP includes documentation writing and network diagramming, analyses of traffic and congestion, analyses of application behavior and demand, procedures for failsafe and disaster recovery operation, forecasting requirements, and redesign.

Accordingly, by resource, or network resource, is meant any physical or virtual component of limited availability within the computer network. Every device connected to the computer network is a resource. Every internal system component of such a device is a resource. Virtual network resources include files, network connections, and memory areas.

In the art of NRP, network resources are described or depicted in a variety of ways. An exemplary high-level notation for facilitating the development of network management applications has been proposed in the publication "A High-level Notation for Developing Network Management Applications: Resource Description and Manipulation Language". The Resource Description and Manipulation Language (RDML) proposed therein is defined as a purely declarative language and serves to describe Virtual Managed Object Classes (VMOCs), including associated attributes and available methods.

A major downside of RDML is its inability to express the meaning of the objects it describes. It is thus an object of the invention to present a model that conveys the structure as well as the significance of its elements, allowing for an automated interpretation of the result.

This object is achieved by a method according to claim 1, a computer program product according to claim 9, or a data storage device according to claim 10.

A main idea of the invention is to reflect the semantics of any network by deriving an ontology of its resources. In information science, by ontology is meant a formal representation of a set of concepts within a domain and the relationships between those concepts. By providing a formal, explicit specification of this shared conceptualization, the network ontology thus can be used to reason about the properties of the network, and may be used to define the network as a whole. Simply put, the ontology provides a shared vocabulary that serves to model the entire network - that is, the type of resources that exist, their properties and relations.

Further developments of the invention can be gathered from the dependent claims and the following description.

In the following the invention will be explained further making reference to the attached drawing.

To describe a network resource according to an embodiment of the invention, an instance of the network resource is identified. Furthermore, a class is assigned to the network resource. In addition, an attribute of the network resource is defined. Finally, a relation of the network resource to a further network resource is specified.

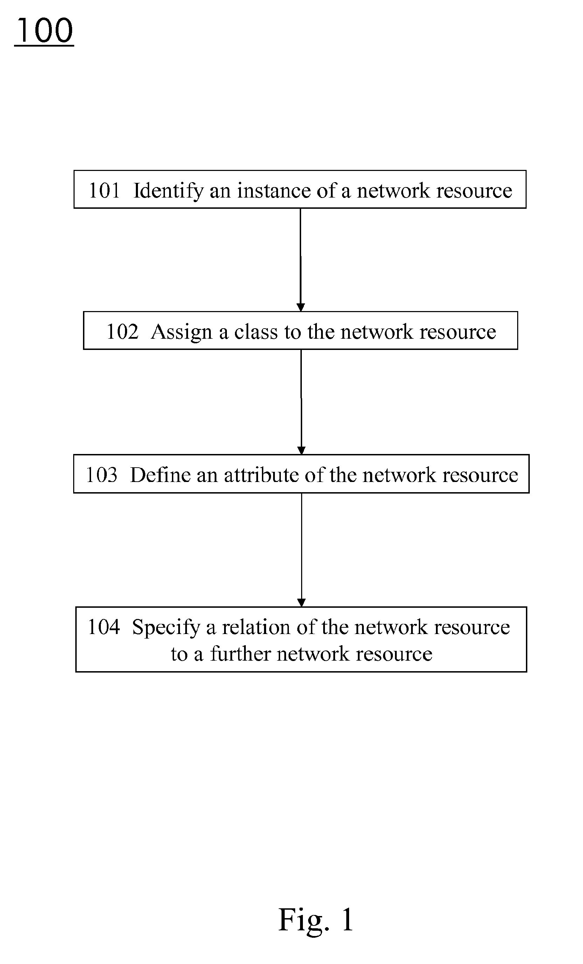

Fig. 1 shows a flowchart depicting a method according to an embodiment of the invention.

In the following, a method according to the invention is elucidated by way of example, referencing Fig. 1.

The flowchart 100 of Fig. 1 comprises a first step 101, a second step 102, a third step 103, and a forth step 104 mutually connected by arrows indicating a preferred order of execution.

In the embodiment at hand, the method is performed by a software program.

In the first step 101, the software program identifies an instance of the network resource to be described. By an instance, also called an individual, is meant a basic building block of the envisaged ontology. This may be a concrete object such as a network router, or an abstract individual such as an Internet Protocol (IP) address. Not necessarily does the instance need to be an explicit part of the ontology; however, one of the general purposes of the resulting ontology is to provide a means of classifying instances.

To express the state or presence of a network resource at different points in time, an alternative embodiment accounts for the temporal extent of the instance by associating with it a time index. Reflecting the spatio-temporal aspect of this model, the resulting ontology would be called four-dimensional (4D) in the art of ontology engineering. As an example, a network node may be included in or excluded from a high-availability (HA) cluster; only while it is contained in the cluster, it is considered a cluster node.

In the second step 102, the software program assigns a class, alternatively called a type, sort, category, or kind, to the network resource. In the embodiment at hand, the class forms an abstract group, set, or collection of network resources. Since, in this case, it is characterized solely by its membership, the class would be called extensional in the art of ontology engineering. In an alternative embodiment employing an intensional definition, the class would be considered an abstract object that is defined by values of aspects that are constraints for being member of the class. As an example, the class "Subnet" may be defined as the class of all subnetworks in an extensional ontology, whereas it may be defined as the abstract object imposing a common, designated routing prefix in an intensional ontology. The ontology built according to an embodiment of the invention may contain some classes that are extensional and others that are intensional in nature.

To allow for the creation of class hierarchies, a class can subsume or be subsumed by other classes; a class subsumed by another is commonly called a subclass or subtype of the subsuming class or supertype. For example, in the ontologies outlined above, a supertype "Network" may subsume "Subnet", since necessarily anything that is a member of the latter class is a member of the former. In this example, the subtype "Subnet" may be considered to inherit the properties of the supertype "Network". In the embodiment at hand, to allow for multiple inheritance, a subtype is allowed to have any number of supertypes. Thus the class "NetworkHub" may be a subtype of the supertype "Repeater" and also a subtype of the supertype "MultiportDevice". In an alternative embodiment, for the sake of simplification, a subtype may only be allowed to have a single supertype.

To alleviate classification, the ontology used comprises one or more partitions, that is, sets of related classes and associated rules that allow network objects to be classified by the appropriate subclass. The rules correspond with the aspect values that distinguish the subtypes from the supertype. For example, the ontology may comprise a partition of the class "NetworkResource" into the classes "WirelineResource" and "WirelessResource". In this case, the corresponding partition rule may state that a network resource be classified as a "WirelessResource" if it supports radio frequency, microwave, infrared (IR) communication, or any combination of these technologies. Similarly, a "WirelineResource" may be **characterized in that** it supports wires, coaxial cables, striplines, optical fibers, electric power lines, waveguides, or any combination thereof. Since the partition rules ensure that every concrete object of the supertype is an instance of at least one of the partition classes, this partition would be called exhaustive in the art of ontology engineering. An alternative embodiment of the invention may make use of disjoint partitions. In such an embodiment, adhering to the example given above, the corresponding partition rule or rules would guarantee that a single network resource cannot be cannot be contained in both the "WirelineResource" and "WirelessResource" classes; a constraint which is not fulfilled by the rule stated above.

In the third step 103, the software program defines an attribute of the network resource. In this context, by attribute is meant any other object, typically an aspect or part, to which the network resource is related. In contrast to the term's use in general language, an attribute in the sense of ontology engineering may be independent of the network resource with which it is associated. In particular, the attribute may be a class or an individual. While the kind of attribute that is defined determines the nature of its relation to the network resource, the attribute itself expresses a fact that is specific to the network resource to which it pertains. For example, the "GSMBaseTransceiverStationNetwork" object may have attributes such as "<has as name> GSM Base Station Network", "<has by definition as part> mobile station", "<has by definition as part> base station subsystem", and "<has by definition as part> network and switching subsystem".

In the given embodiment, the value of an attribute can take the form of a complex data type, also called a composite data type. In computer science, composite data types are data types which can be constructed in a program using its programming language's primitive data types and other composite types. The act of constructing a composite type is known as composition. For example, the "GSMBaseTransceiverStationNetwork" object may possess the additional attribute "<has by definition as part one of> {directional antenna, omnidirectional antenna}", meaning that the associated antenna must belong to one of the listed types.

Finally, in the forth step 104, the software program specifies a relation, sometimes called relationship, of the network resource to a further network resource. To allow for added flexibility, the relation is of a particular type or class that specifies in what sense the network resource is related to the further network resource in the ontology. For example, the concept Long Term Evolution (LTE) and the concept Universal Mobile Telecommunications System (UMTS) may be connected by a relation of type "<is defined as an extension of>". In the embodiment at hand, this fact could be fully expressed as "LTE <is defined as an extension of> UMTS". This example also illustrates that the relation has a direction of expression. An inverse expression may state the same fact, but with a reverse phrase in natural language.

Taken together, the set of relations may be considered to describe the semantics of the NRP domain. The resulting ontology would thus be called a domain ontology or domain-specific ontology. The set of used relation types (classes of relations) and their subsumption hierarchy describe the expression power of the language in which the software program expresses the network resource ontology.

In the given embodiment, a pivotal type of relation is the subsumption relation. This type of relation is expressed in natural language as "<is-a-superclass-of>", the converse of "<is-a>", "<is-a-subtype-of>" or "<is-a-subclass-of>". This relation defines which network resources are classified by which class. For example, the class "FrameRelayResource" is a subclass of "WirelineResource", which in turn is a subclass of "NetworkResource". The resulting structure of objects is a taxonomy, sometimes called a taxonomic scheme, that is, a particular classification of network resources arranged in a hierarchical structure. For enhanced visualization, in an optional step (not depicted), the software program presents this taxonomy to an end user as a tree-like structure. In order theory, the taxonomy would be formalized as a partially ordered set or poset. In that case, the above-mentioned visualization takes the form of a Hasse diagram of the poset.

In the taxonomy described above, a subtype may also be called a "child" of its supertype. Vice versa, the supertype may be called the "parent" of its subtype.

Another type of relation employed by the software program is the meronymy relation, written as "<part-of>", that represents how network resources combine together to form composite network resources. Extending the example of a GSM base transceiver station network given above, one meronymy may be expressed as "Mobile Terminal <is-by-definition-a-part-of-a> Mobile Station" since a mobile terminal is always one of the components of a mobile station. As a consequence, classes may be part of more than one whole class. In mathematics, the emerging structure is known as an acyclic directed graph or directed acyclic graph (DAG), that is, a directed graph or digraph with no directed cycles. In a DAG, for any vertex v, there is no nonempty directed path that starts and ends on v.

To further refine the semantics it models, the software program includes further types of relations in addition to the standard relations "<is-a-subclass-of>" and "<is-by-definition-a-part-of-a>". Accordingly, the resulting ontology distinguishes between different categories of relation types, such as relations between classes, relations between individuals, relations between an individual and a class, relations between a single object and a collection, and relations between collections. Some relation types are specific to the NRP domain and serve to store specific kinds of facts or to answer particular types of questions concerning the network resources described. For example, the "<connects-to>" relationship may express a potential communication link between two classes or individuals, such as in "UserEquipment <connects-to> GSMBaseTransceiverStationNetwork". The ontology may also reflect the fact that mobile handsets, wireless local loop phones, computers with wireless Internet connectivity, WiFi and WiMAX gadgets etc. all constitute user equipment, and that all of the above are devices. In this example, the software program would be able to answer a user question such as "Which devices connect to a GSM base transceiver station network?"

To lay out clearly its own relations and distinguish between various categories of relation types, the ontology includes its own ontology definition language. To further model common objects that are generally applicable across a wider range of domain ontologies, the software program combines the network resource ontology with an upper ontology, sometimes called foundation ontology. Such an upper ontology contains a core glossary in whose terms objects in a set of domains can be described. For instance, the software program may support standardized upper ontologies such as, inter alia, Dublin Core, the General Formal Ontology (GFO), OpenCyc, the Suggested Upper Merged Ontology (SUMO), or the Descriptive Ontology for Linguistic and Cognitive Engineering (DOLCE).

To encode the resulting ontology, the software program makes use of a formal language called an ontology language. For example, the software program may employ an ontology language such as, inter alia, the Common Algebraic Specification Language, Common Logic (ISO standard 24707), CycL, Developing Ontology-Grounded Methods and Applications (DOGMA), Gellish, IDEF5. KIF, Rule Interchange Format (RIF), Web Ontology Language (OWL), or SADL.

A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of describing a network resource, the method comprising the steps of
identifying (101) an instance of the network resource, assigning (102) a class to the network resource and defining (103) an attribute of the network resource, **characterized in that** the method further comprises the step of
specifying (104) a relation of the network resource to a further network resource.

2. A method according to claim 1, **characterized in that** the method further comprises the step of
stating a restriction of the network resource.

3. A method according to claim 1, **characterized in that** the method further comprises the step of
framing a rule based on the network resource.

4. A method according to claim 1, **characterized in that** the method further comprises the step of
storing the class, the attribute, and the relation on an ontology server.

5. A method according to claim 1, **characterized in that** the method further comprises the step of
depicting the class, the attribute, and the relation by means of an inheritance graph.

6. A method according to claim 1 when performed by a computer system, **characterized in that** the method further comprises the step of
exchanging the class, the attribute, and the relation with a further computer system.

7. A method according to claim 6, **characterized in that** the method further comprises the steps of
receiving a request by a service and
providing the class, the attribute, and the relation to the service.

8. A method according to claim 1, **characterized in that** the steps (101, 102, 103, 104) are repeated for a plurality of network resources and further relations among the network resources are determined by means of inference.

9. A computer program product comprising computer-executable instructions for performing a method when the program is run on a computer, the method comprising the steps of
identifying (101) an instance of the network resource, assigning (102) a class to the network resource and defining (103) an attribute of the network resource, **characterized in that** the method further comprises the step of
specifying (104) a relation of the network resource to a further network resource.

10. A device programmed or configured to perform a method comprising the steps of
identifying (101) an instance of the network resource, assigning (102) a class to the network resource and defining (103) an attribute of the network resource, **characterized in that** the method further comprises the step of
specifying (104) a relation of the network resource to a further network resource.
